Europäisches Patentamt

European Patent Office

Office européen des brevets

(19)

(11) Publication number: **0 384 604**

**A1**

# EUROPEAN PATENT APPLICATION

(12)

(21) Application number: **90301183.1**

(51) Int. Cl.⁵: **G02F 1/29**

(22) Date of filing: **05.02.90**

(30) Priority: **07.02.89 GB 8902628**
**10.02.89 GB 8903082**

(43) Date of publication of application:
**29.08.90 Bulletin 90/35**

(84) Designated Contracting States:
**BE DE ES FR GB IT NL**

(71) Applicant: **BRITISH AEROSPACE PUBLIC LIMITED COMPANY**
**11 Strand**
**London WC2N 5JT(GB)**

(72) Inventor: **Aldrige, Nigel Bruce, British Aerospace Plc.**
**Sowerby Research Centre, FPC 267, P.O. Box 5**
**Filton, Bristol(GB)**
Inventor: **White, Henry Jameson, British Aerospace Plc.**
**Sowerby Research Centre, FPC 267, P.O. Box 5**
**Filton, Bristol(GB)**

(74) Representative: **Newell, William Joseph et al**
**Wynne-Jones, Lainé & James 22 Rodney Road**
**Cheltenham Gloucestershire GL50 1JJ(GB)**

(54) **Optical interconnection systems.**

(57) Apparatus for reconfigurably interconnecting a plurality of optical inputs ($P_1$) and a plurality of optical outputs ($P_6$) comprises:-
reprogrammable optical storage means ($P_2$), and pattern generating means ($P_3$) for sequentially generating in said optical storage means ($P_2$) a plurality of patterns which together make up a composite pattern defining a desired optical interconnect configuration for interconnecting said inputs ($P_1$) and said outputs ($P_6$).

*Fig.1.*

$$(a_1 \; a_2 \; a_3) \begin{pmatrix} c_{11} & c_{12} & c_{13} \\ c_{21} & c_{22} & c_{23} \\ c_{31} & c_{32} & c_{33} \end{pmatrix} = (b_1 \; b_2 \; b_3)$$

EP 0 384 604 A1

## Optical Interconnection System

This invention relates to an optical interconnection system for providing a plurality of parallel interconnects between a plurality of inputs and a plurality of outputs. In particular, though not exclusively, the invention relates to such systems in which the weighting or attenuation applied to each interconnect may be adjusted.

In many forms of information processing it is desirable to provide an interconnection system or architecture which allows reconfigurable (or programmable) high density interconnection schemes. Such systems are required, for example, when adaptable communication pathways are required between electronic processors, or in highly parallel all-optical or opto-electronic computing architectures. An example of such a process is where vector-matrix multiplication is to be performed. A typical arrangement for multiplication of an N order vector and an N order matrix comprises an N-element input array for inputting values representint the N-order vector, an NxN interconnect array comprising $N^2$ elements for representing the NxN order matrix, and an N-element output array. Optics are provided for imaging the N input values onto the interconnect array so that each input signal is imaged onto a respective group of N interconnect elements (for example a single row of the interconnect array) and that respective groups of N interconnect elements (for example the columns of the interconnect array) are imaged onto a respective element of the output array.

In this type of arrangement the values of the elements making up the NxN interconnect array may need to be changed between or during successive optical processing operations and it is therefore necessary to provide an interconnect array which can be updated as required with fresh elements. In a previous proposal, the interconnect array has been in the form of a spatial light modulator (SLM). In the arrangement above it will be seen that if the input consists of N channels, then in order to define all possible interconnections with the N output channels (i.e. to perform vector-matrix multiplication), the interconnect SLM array must have $N^2$ separately resolvable elements (the number of elements is referred to herein as the space band width product SBWP). It has been predicted that if optical computing architectures are to show a significant advantage over competing technologies, notably electronics, these systems must be capable of handling an input array of about 100 x 100 (i.e. about $10^4$) which implies a spatial light modulator space bandwidth product of about $10^8$. Although such spatial light modulators are not inconceivable, suitable devices will require extensive development.

We have therefore designed a system in which the space bandwidth product requirement of the spatial light modulator is considerably reduced compared to that required by the proposal set out above.

According to one aspect of this invention, there is provided apparatus for reconfigurably interconnecting a plurality of optical inputs and a plurality of optical outputs comprises:-
reprogrammable optical storage means, and pattern generating means for sequentially generating in said optical storage means a plurality of patterns which together make up a composite pattern defining a desired optical interconnect configuration for interconnecting said inputs and said outputs.

The invention will now be described by way of non-limiting example, reference being made to the accompanying drawings, in which

Figure 1 is a schematic diagram illustrating an acousto-holographic reconfigurable interconnect scheme;

Figure 2 is a schematic diagram illustrating an all holographic reconfigurable interconnect scheme;

Figure 3 is a schematic diagram illustrating a SLM-based time integrating or broadcast interconnect scheme, and

Figure 4 is a schematic diagram illustrating a holographic-based time integrating or broadcast interconnect scheme.

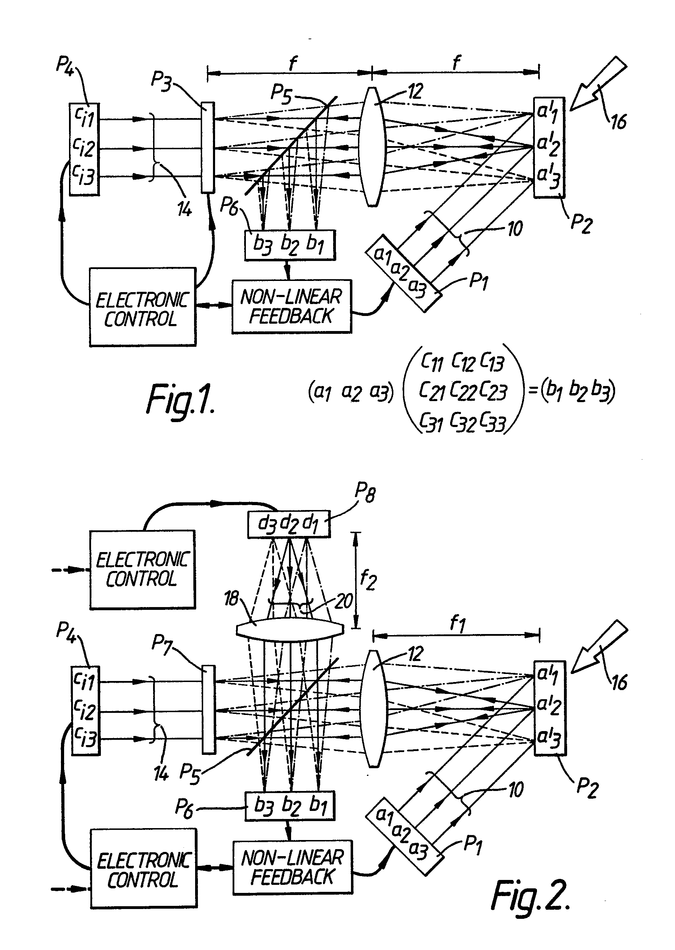

Referring to Figures 1 and 2, the schemes illustrating therein are designed to form weighted interconnections between the input elements and a set of possible output elements. Some of the weightings may have a value of zero, i.e. the particular input and output are not connected. In addition these interconnections are to be reconfigurable. This type of scheme is referred to herein as a network interconnection scheme.

Both of the systems of Figures 1 and 2 allow the SBWP of the spatial light modulator to be reduced from $N^2$ to N. This is achieved by using a spatial light modulator having a SBWP of N together with a controllable acousto-optic or holographic deflector, to generate in a reprogrammable optical store a holographic pattern which defines each of the $N^2$ weighted interconnects required.

Thus, the reprogrammable (or "dynamic") interconnect holograms may be recorded serially whilst still allowing parallel, synchronous read out. In Figures 1 and 2 examples of interconnect systems are shown which include a one-dimensional, 3 x 1 input array, to demonstrate the operation of the device. Normally the input would be two dimensional with a resolution of about 100 x 100. In each of the arrangements of Figures 1 and 2 any input $a_i$ can be connected to any output $b_j$.

Referring now specifically to Figure 1, the arrangement comprises an input array $P_1$ made up of elements $a_1$, $a_2$ and $a_3$ which modulate a coherent beam 10 transmitted or reflected thereby. The beam 10 is made incident on a reprogrammable optical store $P_2$ (otherwise referred to as a dynamic hologram). The dynamic hologram $P_2$ also receives, via a lens 12 and an acousto-optic deflector $P_3$, a coherent beam 14 modulated in accordance with the coefficients $C_{i1}$, $C_{i2}$ and $C_{i3}$ presently written on the spatial light modulator $P_4$.

The various components described thus far are configured so that inputs $a_1$, $a_2$ and $a_3$ of input array $P_1$ are mapped onto locations $a'_1$, $a'_2$ and $a'_3$ of the dynamic hologram $P_2$. Also, the coefficients $C_{i1}$, $C_{i2}$ and $C_{i3}$ are brought to a focus on one of the locations $a'_1$, $a'_2$ and $a'_3$, as defined by the acousto-optic deflector $P_3$. The outputs from the spatial light modulator $P_4$ are diffracted by the acousto-optic deflector $P_3$ and then focussed by a 2f optical system including the lens 12 to a specific one of the locations $a'_1$, $a'_2$ or $a'_3$. The coherent modulated beams 10 and 14 interfere at the specific location to form a set of holographic gratings. In the instance shown in solid lines in Figure 1, the coefficients $C_{i1}$, $C_{i2}$ and $C_{i3}$ have been brought to a focus at location $a'_2$ on the dynamic hologram $P_2$. Assuming that the coefficients on SLM $P_4$ and $C_{21}$, $C_{22}$ and $C_{23}$, then a set of gratings $a_2C_{21}$, $a_2C_{22}$ and $a_2C_{23}$ will be induced in the dynamic hologram $P_2$ through the appropriate optical non-linear process. The strengths of the signals $C_{21}$, $C_{22}$ and $C_{23}$ determine the diffraction efficiencies of these gratings.

When the writing beams are removed, the gratings remain fixed in the dynamic hologram $P_2$ until they are erased or modified.

Having formed a first set of gratings, the SLM $P_4$ is reprogrammed with the next set of coefficients, e.g. $C_{31}$, $C_{32}$ and $C_{33}$, and the acousto-optic deflector is controlled to cause the beam 14 to be focussed at the next location on the dynamic hologram $P_2$, e.g. location $a'_3$, to interfere and form gratings with the input signal $a_3$. In a similar manner as before, a series of gratings $a_3C_{31}$, $a_3C_{32}$ and $a_3C_{33}$ will be formed. The process is then repeated until all the desired sets of gratings have been formed on the dynamic hologram $P_2$. Thereafter the input states can be synchronously interconnected to the outputs array $P_6$ as to be described below. The scheme of Figure 1 includes a coherent read out beam 16 which interacts with the sets of holograms stored in the dynamic hologram $P_2$ and then passes via the lens 12 to a semi-transparent mirror $P_5$ thence to be deflected onto the output array $P_6$ which is made up of output elements $b_1$, $b_2$, $b_3$. In this way, $b_1$ will receive a signal $(a_1C_{11} + a_2C_{21} + a_3C_{31})$, $b_2$ will receive a signal $(a_1C_{12} + a_2C_{22} + a_3C_{32})$ and $b_3$ will receive a signal $(a_1C_{13} + a_2C_{23} + a_3C_{33})$. Thus the scheme as illustrated performs vector multiplication of:

$$\left( a_1 \;\; a_2 \;\; a_3 \right) . \begin{pmatrix} C_{11} & C_{12} & C_{13} \\ C_{21} & C_{22} & C_{23} \\ C_{31} & C_{32} & C_{33} \end{pmatrix}$$

The values of the matrix can be adjusted simply by programming the appropriate values on the SLM $P_4$ in conjunction with the appropriate acoustic deflection. In some applications the values of the matrix will remain fixed for a series of optical processing operations. In other applications the coefficients will be continuously updated by reprogramming the SLM $P_4$ and appropriate control of the acousto-optic deflector.

In the arrangement as illustrated in Figure 1, problems may arise because the acousto-optic deflector $P_3$ imposes a frequency shift on the beams diffracted thereby. This means that, without corrective action, "running" interference patterns would be incident on the dynamic hologram $P_2$ and this could destroy any optical non-linear effect, e.g. the photorefractive effect would not follow the incident interference pattern. This may be overcome by applying pulsed writing beams, having pulse widths in the nanosecond regime, to "freeze" movement of the running interference patterns.

Figure 2 illustrates an example of a scheme which overcomes this problem and in which the acousto-optic cell $P_3$ is replaced by a deflection hologram $P_7$ under the control of a SLM $P_8$. In this scheme, beams 10 and 14, the input array $P_1$, dynamic hologram $P_2$, SLM $P_4$, lens 12, semi-transparent mirror $P_5$ and output array $P_6$ perform similar functions as the corresponding components in the arrangement of Figure 1 and will not therefore be described in detail again. As mentioned above, the required deflection of the beam 14 modulated according to the coefficients $C_{i1}$, $C_{i2}$, $C_{i3}$ on the SLM $P_4$ is effected by means of a deflection

hologram $P_7$ which is controlled by SLM $P_8$ having an array of elements $d_1$, $d_2$ and $d_3$. The output from SLM $P_8$ is collimated by a lens 18 and reflected onto the deflection hologram $P_7$ by the semi-transparent mirror $P_5$. In operation each of the elements $d_1$, $d_2$ and $d_3$ is activated in turn to initiate a writing beam 20 which, when collimated by lens 18, is at a respective given angle relative to the optical axis. The writing beam 20 interacts with a plane uniform beam (not shown) at the deflection hologram $P_7$ so that it determines the angle through which the deflection hologram $P_7$ diffracts the beam 14 modulated in accordance with the output of the SLM $P_4$. For example, when element $d_2$ of SLM $P_8$ is activated, the angle of the collimated writing beam 20 is parallel to the optical axis and thus the deflection hologram does not diffract the beam 14. Thus the coefficients $C_{21}$, $C_{22}$ and $C_{23}$ presently on the SLM $P_4$ are mapped onto location $a'_2$ of the dynamic hologram $P_2$ as shown by the solid lines in Figure 2. Location $a'_2$ also receives input $a_2$ so that a set of three gratings $a_2$, $C_{21}$, $a_2 C_{22}$, and $a_2 C_{23}$ are formed at the location. Thereafter, element $d_1$ of SLM $P_8$ is activated, e.g., to form a hologram in the deflection hologram $P_7$ which causes a new set of outputs $C_{11}$, $C_{12}$ and $C_{13}$ to be deflected and mapped onto location $a'_1$ of the dynamic hologram $P_2$ as shown by the chain-dot lines in Figure 2. Similarly activation of $d_3$ causes the outputs $C_{31}$, $C_{32}$ and $C_{33}$ to be mapped onto location $a'_3$ of the dynamic hologram $P_2$.

In this way, a set of three gratings is formed at each location on the dynamic hologram $P_2$ as in the scheme of Figure 1. The strengths of the signals $C_{i1}$, $C_{i2}$, $C_{i3}$ etc. determine the diffraction efficiencies of the gratings, and thus the weighting applied to the particular component signal passed thereby. As in Figure 1, a read out beam interacts with the dynamic hologram $P_2$ and is passed via lens 12 and mirror $P_5$ to fall on the output array $P_6$, so that the scheme determines the values of $b_1$, $b_2$, $\overline{b_3}$ in the expression:-

$$(a_1 \quad a_2 \quad a_3) \bullet \begin{pmatrix} C_{11} & C_{12} & C_{13} \\ C_{21} & C_{22} & C_{23} \\ C_{31} & C_{32} & C_{33} \end{pmatrix} = \begin{pmatrix} b_1 \\ b_2 \\ b_3 \end{pmatrix}$$

In each of the above arrangements sets of coefficients are written in sequence into the SLM $P_4$ and a particular location of the dynamic hologram is addressed (by control of the acousto-optic deflector or the deflection hologram) to form a set of gratings. With each new set of coefficients written into SLM $P_4$ a further location of the dynamic hologram is addressed (by control of the acousto-optic deflector or deflection hologram). The process is repeated until all of the locations of the dynamic hologram have been addressed. Thereafter the dynamic hologram can be updated or refreshed as required.

These arrangements allow the sequential programming of NXN coefficients in a reconfigurable interconnect system using a SLM having space band width product of less than $N^2$ and, in the examples given, of only N. Both these sequential holographic recording techniques allow all possible interconnections between an input plane and an output plane to be specific with SLMs of relatively low resolution (or SBWP).

In both the schemes of Figures 1 and 2, the read out beam and the input beam may be interchanged. That is to say in both arrangements the coefficients $C_{ij}$ incident at a given location $a'_i$ on the dynamic hologram $P_2$ may interface with a plane uniform beam to form the interconnect holograms in the dynamic hologram $P_2$. This modication may be particularly advantageous if the inputs are high bandwidth temporally encoded signals, since in the modified arrangement they will not participate in hologram formation and hence will not be limited by the dynamics of the hologram formation process. There are of course significant advantages also with the systems as specifically illustrated, not least because the read out beam may be of "high power", thus increasing the light efficiency of the system.

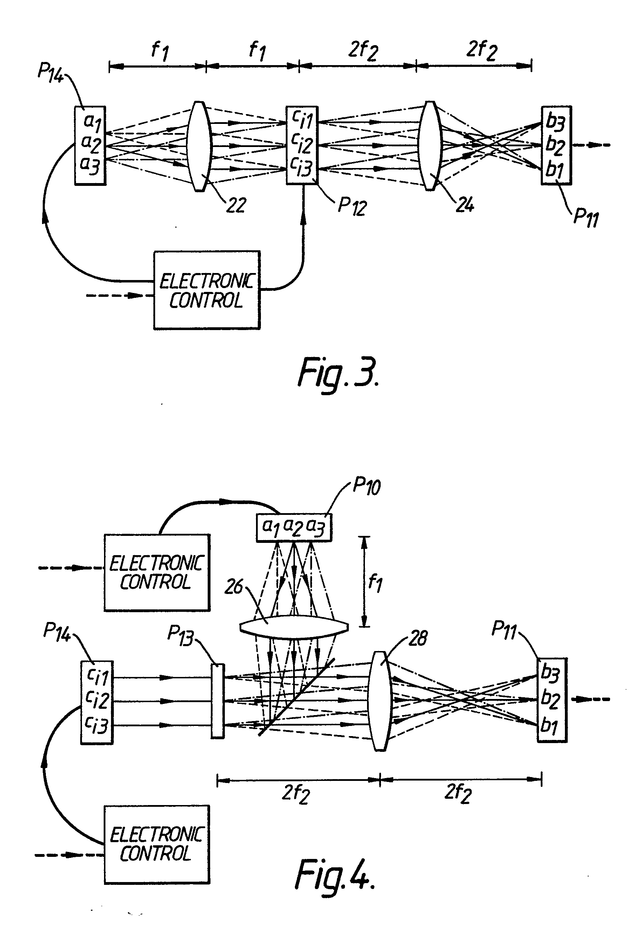

The schemes described above rely on storage in the interconnection recording medium to enable the inputs to be synchronously connected to the outputs in any possible configuration. Referring now to Figures 3 and 4, there are illustrated two schemes which can be used for broadcast interconnections, i.e. where one input is simultaneously connected to many outputs, or for network interconnects in which case the output detector array must be capable of integrating the signals incident thereon or post-processing is necessary. In both of the schemes of Figures 3 and 4 an NXN input SLM array $P_{10}$ is connected by a weighted interconnection system to a NXN output array $P_{11}$, but for illustrative purposes the input and output arrays are shown as 3 x 1 vectors $(a_1 \ a_2 \ a_3)$ and $(b_1 \ b_2 \ b_3)$ respectively. In each of the schemes of Figures 3 and 4, each possible interconnection between an input element and an output element is given a respective weighting coefficient $C_{ij}$. The weighting coefficients are presented in sequence in sets of 3(N) on an interconnect SLM $P_{12}$ or $P_{14}$ respectively which in a general case would be of resolution NxN. In Figure 3, a diverging beam from the input SLM $P_{10}$ (or an array of discrete input devices) is collimated and directed by a positive lens 22 onto the interconnect SLM $P_{12}$. The weightings on the interconnect SLM$P_{12}$ are encoded as variable transmission values. The elements of the input SLM are activated in synchronism with the values written on the interconnect SLM. For example when element $a_1$ is activated, coefficients $C_{11}$, $C_{12}$, $C_{13}$ are written onto interconnect SLM $P_{12}$. When element $a_2$ is activated, coefficients $C_{21}$, $C_{22}$, $C_{23}$ are written onto SLM $P_{12}$ and so on. The beams transmitted by the interconnect SLM $P_{12}$ are imaged by a positive lens 24 onto the output array $P_{11}$. For the example cited input $a_3$ is thus connected to $b_1$, $b_2$ and $b_3$ with weights $C_{31}$, $C_{32}$ and $C_{33}$ respectively, so that the signal from input $a_3$ is broadcast to all possible outputs.

For network interconnection requirements, the next input $a_n$ is selected and addresses a new set of weights $C_{n1}$, $C_{n2}$, $C_{n3}$ on the interconnect SLM $P_{12}$ and the transmitted signals are again imaged onto the output plane. This process is repeated for each input signal in turn. The many interconnect signals arriving sequentially at each output can be integrated by the detection process or combined as desired by electronic post processing. This system may suffer from the limited angular field of view of the interconnect SLM $P_{12}$, especially for the network interconnect application.

If this is a problem the arrangement illustrated in Figure 4 may be used. This arrangement includes an input SLM $P_{10}$ connected via a weighted interconnection system to an output array $P_{11}$. A diverging beam derived from a signal in input SLM $P_{10}$ is collimated and directed by a positive lens 26 onto a dynamic hologram $P_{13}$ which incorporates a reprogrammable or dynamic recording medium, where it interferes with a plane uniform beam (not shown). The induced hologram determines the degree of deflection applied to a beam transmitted therethrough. The induced hologram is then read-out by a set of weightings derived from weighting SLM $P_{14}$ which results in a multiplication between the one input present at input SLM $P_{10}$ and the weightings currently set on SLM $P_{14}$. The diffracted beams are then imaged by a positive lens 28 onto the output array. The weighting SLM $P_{14}$ and the input SLM $P_{10}$ are synchronously controlled so that when input $a_1$ is activated, it defines a deflection hologram at $P_{13}$ which is addressed by a set of weightings $C_{11}$, $C_{12}$, $C_{13}$ and the diffracted outputs $a_1C_{11}$ $a_1C_{12}$ and $a_1C_{13}$ are imaged onto the outputs $b_1$, $b_2$ and $b_3$ respectively. This process is repeated for each input and each associated set of coefficients ($C_{ij}$) in turn and the outputs are integrated by the detection process or combined as desired by electronic post processing.

If the arrangement of Figure 4 is to be used for broadcast (as opposed to time integrating network applications), then it can be modified so that the currently active input signal addresses a hologram formed by interference between the current set of weightings derived from $P_{14}$ and a plane uniform beam. As with the similar modification mentioned in relation to Figures 1 and 2, the temporal bandwidth of the input is not then limited by the dynamics of the holograms formation.

Both of the schemes of Figures 3 and 4 can be used synchronously to interconnect the inputs and the outputs for the special case where the network interconnection weightings between each input and all the outputs are identical.

The arrangements illustrated allow either synchronous (Figures 1 and 2) or sequential (Figures 3 and 4) weighted interconnections between N inputs and N outputs (a total of NxN possible interconnections), but the SLM for writing the weighting coefficients needs only to be of resolution N. In these schemes, the high resolution or SBWP normally required is reduced by relying on the storage properties of certain dynamic holographic materials, e.g. photorefractives. The properties of these materials is well-documented and the selection and use of a suitable material will be well apparent to one skilled in the art.

Other advantages of the arrangements of the present invention over those previously proposed include: the removal of an imaging optics plane for imaging the NxN outputs of the interconnection/weighting SLM onto the N outputs of the system; a reduction in the optical aperture of the system, and, in the arrangements of Figures 1 and 2, the ability arbitrarily to change the position of each set of gratings by acousto-optic, or holographic deflection.

## Claims

1. Apparatus for reconfigurably interconnecting a plurality of optical inputs and a plurality of optical outputs comprises:-
reprogrammable optical storage means, and pattern generating means for sequentially generating in said optical storage means a plurality of patterns which together make up a composite pattern defining a desired optical interconnect configuration for interconnecting said inputs and said outputs.

2. Apparatus according to Claim 1 wherein said interconnect configuration is activated synchronously, and/or said reprogrammable optical storage means includes an optically non-linear storage material, such as, for example, a photorefractive storage medium.

3. Apparatus according to any Claim 1 or 2, wherein said pattern generating means includes a spatial light modulator means for generating a pattern and deflection means for deflecting the pattern generated by said spatial light modulator means on only part of the storage area of said optical storage means.

4. Apparatus according to Claim 3 wherein said deflection means comprises at least one of electro-optic, magneto-optic acousto-optic, dynamic holographic, and opto-mechanical deflector means.

5. Apparatus for reconfigurably interconnecting a plurality of optical inputs and a plurality of optical outputs, comprising:-
a reprogrammable holographic storage means,
means for making incident on said storage means, a succession of radiation patterns each for generating an array of holographic gratings, and
deflection means operable to deflect said radiation patterns with respect to said storage means.

6. Apparatus for distributing a plurality of input signals between a plurality of outputs, said apparatus comprising:-
input means for supplying each of said input signals in sequence;
distribution means for passing a component of each input signal to each of said outputs; and
spatial light modulator means for applying an adjustable modulation or weighting to each of said components.

7. Apparatus for reconfigurably interconnecting an input plane and an output plane, comprising:-
reprogrammable optical storage means;
spatial light modulator means for providing a modulated radiation beam.
focussing means for focussing said radiation beam; on said optical storage means;
deflection means operable to vary the position or angle at which said modulated radiation beam is incident on said optical storage means;
means for causing a further radiation beam (modulated or uniform) to interfere with said modulated radiation beam to generate a diffraction pattern in said optical storage means, and
means for controlling said spatial light modulator means and said deflection means to generate a plurality of diffraction patterns in said optical storage means to make up a reprogrammable holographic array for reconfigurably interconnecting said output and output planes.

8. Apparatus according to Claim 7, wherein said apparatus is operable to effect substantially synchronous interconnection between said input plane and said output plane.

9. Apparatus for distributing a plurality of input signals between a plurality of outputs, said apparatus comprising an array of signal input elements, an array of output elements, variable transmission means provided between said arrays for applying a variable weighting to the signals passing from said input array to said output array, means for activating a selected input element and means for controlling said spatial light modulator means to generate a respective weighting pattern corresponding to said selected one input element.

10. Apparatus according to Claim 9 wherein said means for activating activates each of said input elements sequentially and said array of output elements comprises an array of time integrating detector means, and said variable transmission means preferably comprises a spatial light modulator or dynamic hologram means.

Fig.1.

$$(a_1 \; a_2 \; a_3) \begin{pmatrix} c_{11} & c_{12} & c_{13} \\ c_{21} & c_{22} & c_{23} \\ c_{31} & c_{32} & c_{33} \end{pmatrix} = (b_1 \; b_2 \; b_3)$$

Fig.2.

Fig.3.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 279 679 (BRITISH TELECOM) * Column 4, line 2 - column 5, line 45; figure; claims * | 1-10 | G 02 F 1/29 |
| A | FR-A-2 243 573 (TREHEX et al.) * Claims * | 1,5-7,9 | |
| A | EP-A-0 122 192 (THOMSON-CSF) * Abstract; figures * | 1,5-7,9 | |

TECHNICAL FIELDS SEARCHED (Int. Cl.5)

G 02 F
H 04 Q

The present search report has been drawn up for all claims

| Place of search | Date of completion of the search | Examiner |
|---|---|---|
| THE HAGUE | 07-05-1990 | LOFFREDO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)